(19) Europäisches Patentamt
European Patent Office
Office européen des brevets

(11) **EP 3 789 452 A1**

(12) **EUROPEAN PATENT APPLICATION**

(43) Date of publication:
**10.03.2021 Bulletin 2021/10**

(51) Int Cl.:
*C08L 61/24* *(2006.01)*     *D21H 17/37* *(2006.01)*
*D21H 17/51* *(2006.01)*     *B01D 39/16* *(2006.01)*
*B01D 39/18* *(2006.01)*     *B01D 39/20* *(2006.01)*
*D04H 1/64* *(2012.01)*      *C03C 25/34* *(2006.01)*

(21) Application number: **19195888.3**

(22) Date of filing: **06.09.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Neenah Gessner GmbH
83052 Bruckmühl (DE)**

(72) Inventors:
 • FRITZE, Urs Fabian
  83024 Rosenheim (DE)
 • HÖRL, Werner
  83620 Feldkirchen-Westerham (DE)
 • DEMMEL, Andreas
  83620 Feldkirchen-Westerham (DE)

(74) Representative: **Gerauer, Marc Philippé
Kraus & Weisert
Patentanwälte PartGmbB
Thomas-Wimmer-Ring 15
DE-80539 München (DE)**

(54) **RESIN BINDER COMPOSITION AND FILTER MEDIUM COMPRISING THE RESIN BINDER COMPOSITION**

(57)    The present invention relates to a resin binder composition, a filter medium comprising the resin binder composition as well as related methods and uses.

Printed by Jouve, 75001 PARIS (FR)

## Description

### Technical field of the invention

The present invention relates to a resin binder composition and a filter medium comprising the resin binder composition, a method for producing the filter medium as well as the use of the filter medium for air filtration showing a low formaldehyde emission.

### Prior art

Filter media are used to remove undesirable materials (i.e. particles) from a liquid or gas by passing the liquid or gas through the filter media.

Due to the increasing pollution of the ambient air with fine dust and soot, the requirements for the degree of separation of filter materials and filter elements made from them are constantly increasing, e.g. in the fields of ventilation and air conditioning technology for buildings and vehicle interiors or for the air supply of internal combustion engines. The change in regulations, especially as regards environmental and health protection, has led to the development of low formaldehyde resins with a view to limiting the release of formaldehyde into the environment.

Filter media, especially in the automotive sector, must be stable against the corresponding equipment, such as air, water, fuels, or oils. For this purpose, fibrous materials (nonwovens) are impregnated (or saturated) with binders. Before application of the saturated filter media, a chemical cross linking of the binder is usually carried out, in order to obtain adequate chemical stability, stiffness and strengths.

In addition to self-crosslinking systems (resoles, epoxy resin, etc.), it is also possible to use systems which require an external crosslinker for crosslinking the main binders. An example of this is the crosslinking of acrylic systems or vinyl acetates, such as ethylene vinyl acetates with, for example, melamine resin.

Many of these crosslinkers or crosslinkable resins emit formaldehyde. In order to comply with the limits and workplace concentrations, it is necessary to reduce the formaldehyde emission.

Formaldehyde is known to be dangerous to human health and in 2011 has been described in the US National Toxicology Program as being a human carcinogen. On the other hand, it is not always possible to simply replace (or use different) the binder resins (which emit formaldehyde) in that the binder resins should be such that the media have good strength and workability without scarifying the performances of the media (such as efficiency, air permeability etc.).

The use of binder resins in filter media for filtration has been described for example in US 2014/0263037 and DE 10 2016 125 431. These media, however, will release high amounts of free formaldehyde over the time.

In order to reduce formaldehyde emission in thermal and acoustical fiberglass insulation, the use of melamine resin-containing PFU binder has been described in US 2007/0191574 A1. In this case, the emission is lowered in that the free formaldehyde present in the mixture is lowered (i.e. reacted).

However, in the field of fluid filtration, and more specifically in the field of air filtration, formaldehyde in the form of gas can be released after production and sale of the filter media. For example, the binder resins applied can be crosslinked at a later stage and, accordingly, formaldehyde will be released during storage and/or curing.

Accordingly, there remains a need for binder resins for filter media that can be used in the field of fluid filtration, and more specifically in the field of air filtration, showing excellent performance in terms of efficiency, air permeability, dust holding capacity and strength as well as low formaldehyde emission (even after production).

Therefore, it is an objective of the present invention to provide a resin binder composition with improved properties, in particular with lower emission of harmful substances.

A further objective of the present invention is the provision of a filter medium with improved properties, in particular a good strength and a low emission of harmful substances.

The objective is solved by a resin binder composition comprising:

     i) at least one resin P containing in the form of polymerized units at least one ethylenically unsaturated monomer M, wherein the monomer M optionally comprises further functional groups,
     ii) at least one aminoplast resin and/or at least one phenoplast resin,
     iii) at least one urea derivate and/or urea, and
     iv) optionally at least one additive.

The objective is also solved by a filter medium comprising:

     a) at least one layer L, and
     b) the inventive resin binder composition.

The objective is also solved by use of the inventive filter medium for air filtration as well as a method for producing the inventive filter medium comprising the following steps:

-      providing at least one layer L,
-      applying a resin binder composition according to the invention to at least one layer L.

In the sense of the present invention, the feature "at least one" preferably refers to one to five, more preferably to one to three, and most preferably to one.

The resin P in the sense of the present invention can be a homo- or copolymer consisting of only one kind of monomers in polymerized form (equal to a homopolymer) or a polymer consisting of different kinds of monomers in polymerized form (equal to a copolymer).

In the sense of the present invention at least one ethylenically unsaturated monomer M comprises at least one double bond which can be polymerized.

Preferably, a suitable (mono)ethylenically unsaturated monomer M is a monomer having an acid group, more particularly a carboxyl group (COOH) or a hydroxy-sulfonyl group ($SO_3H$), and salts thereof, such as monoethylenically unsaturated $C_3$-$C_8$ monocarboxylic acids such as acrylic acid, methacrylic acid, crotonic acid, and isocrotonic acid, monoethylenically unsaturated $C_4$-$C_8$ dicarboxylic acids such as maleic acid, fumaric acid, and itaconic acid, and monoethylenically unsaturated sulfonic acids such as vinylsulfonic acid, methallylsulfonic acid, 2-acrylamido-2-methylpropanesulfonic acid. Preferred monomers M are those having at least one carboxyl group, and more particularly acrylic acid, itaconic acid, methacrylic acid, and mixtures thereof.

More preferable, the ethylenically unsaturated monomer M is selected from the group consisting of acrylic acid, methacrylic acid or the salts thereof, acrylamide or mixtures thereof.

Examples of aminoplast resins can be any resins produced by condensation polymerization of urea and formaldehyde or melamine and formaldehyde as well as modified forms thereof, such as melamine polyesters or melamine phenol formaldehyde resins.

Preferably, the inventive resin binder composition comprises at least one aminoplast resin selected from the group consisting of urea formaldehyde resins, melamine formaldehyde resins, melamine polyesters and melamine phenol formaldehyde resins.

Examples of phenoplast resins can be any resins produced by condensation polymerization of phenol derivatives and formaldehyde. It is distinguished between self-crosslinking phenol resins, i.e. resole resins, and non selfcrosslinking phenol resins, i.e. novolac resins. Phenol and/or reactive derivatives thereof, such as monomethylphenols and dimethylphenols, resorcinol, tannins, lignins or mixtures thereof can used for example as a basis for the phenoplast, as the substituted or unsubstituted phenol derivative. Phenol is preferred as a basis for a phenoplast.

Resole resins are phenol-aldehyde resins having a molar ratio of phenol to aldehyde of about 1:1.1 to about 1:5. Preferably, the phenol to aldehyde ratio is from about 1:2 to about 1:3. The phenol component of the resole resin can include a variety of substituted and unsubstituted phenolic compounds. The aldehyde component of the resole resin is preferably formaldehyde, but can include so-called masked aldehydes or aldehyde equivalents, such as acetals or hemiacetals. Specific examples of suitable aldehydes include: formaldehyde, acetaldehyde, propionaldehyde, butyraldehyde, furfuraldehyde, and benzaldehyde.

Preferably, the inventive resin binder composition comprises at least one phenoplast resin selected from the group consisting of resole resins and novolac resins.

Urea used in the inventive composition is $CH_4N_2O$. The urea derivate of the present invention is preferably 2-imidazolidinone, ethylene urea, guanidine or a carbodiimide. By using urea and/or a urea derivate it is possible to reduce the emission of formaldehyde when resin binder compositions are used, preferably the formaldehyde that develops by the crosslinking at a later stage of such a resin binder composition.

The at least one resin P can be used in the form of an emulsion in a solvent. Preferred solvents are water, organic solvents or mixture thereof. Among the organic solvents alcohols can be mentioned such as methanol or ethanol.

The aminoplast resin or the phenoplast resin can be used directly in the form of a solid, e.g. powder, or liquid or in the form of an emulsion or solution in water or an appropriate organic solvent.

Preferably, the resin binder composition can contain further additives selected from the group consisting of thickeners, antifoams, plasticizers, pigments, wetting agents, fillers, flame retardants or mixtures thereof.

The at least one aminoplast resin and/or the at least one phenoplast resin may also not contain an additional crosslinking agent.

Preferably, the resin binder composition according to the invention comprises:

   i) 8 to 98.5%, preferably 22 to 80%, by weight of at least one resin P containing in the form of polymerized units at least one ethylenically unsaturated monomer M, wherein the monomer M optionally comprises further functional groups,

   ii) 1 to 62%, preferably 2 to 58%, by weight of at least one aminoplast resin and/or at least one phenoplast resin, and
   iii) 0.5 to 30%, preferably 2 to 20%, by weight of at least one urea derivative and/or urea,

based on the total weight of the dry solid content of the resin binder composition.

Throughout the description, the "total weight of the dry solid content" of the resin binder composition is the total amount of material contained in the resin binder composition excluding the solvent. It is the material that would be left if the total amount of solvent(s) has vaporized.

Suitable solvents that can be used in a resin binder composition are water, organic solvents or mixture thereof. Among the organic solvents, alcohols can be mentioned such as methanol or ethanol.

Preferably, the composition according to the invention comprises:

   i) 8 to 98.5%, preferably 22 to 80%, by weight of at least one resin P containing in the form of polymerized units at least one ethylenically unsaturated monomer M, wherein the monomer M optionally comprises further functional groups,

ii) 1 to 62%, preferably 2 to 57.9%, by weight of at least one aminoplast resin and/or at least one phenoplast resin, and

iii) 0.5 to 30%, preferably 2 to 20%, by weight of at least one urea derivative and/or urea, and

iv) 0 to 55%, preferably 0.1 to 40%, by weight of at least one additive, based on the total weight of the dry solid content of the resin binder composition.

Examples of preferred resin binder compositions are:

- A resin binder composition comprising

    i) 8 to 98.5% by weight of at least one resin P containing in the form of polymerized units at least one ethylenically unsaturated monomer M selected from the group consisting of acrylic acid, itaconic acid, methacrylic acid, and mixtures thereof,
    ii) 1 to 62% by weight of at least one aminoplast resin, and
    iii) 0.5 to 30% by weight of at least one urea derivative and/or urea,

    based on the total weight of the dry solid content of the resin binder composition.

- A resin binder composition comprising

    i) 8 to 98.5% by weight of at least one resin P containing in the form of polymerized units at least one ethylenically unsaturated monomer M selected from the group consisting of acrylic acid, itaconic acid, methacrylic acid, and mixtures thereof,
    ii) 1 to 62% by weight of at least one phenoplast resin, and
    iii) 0.5 to 30% by weight of at least one urea derivative and/or urea, based on the total weight of the dry solid content of the resin binder composition.

- A resin binder composition comprising

    i) 8 to 98.5% by weight of at least one resin P containing in the form of polymerized units at least one ethylenically unsaturated monomer M that is acrylic acid and/or methacrylic acid,
    ii) 1 to 62% by weight of at least one aminoplast resin and/or at least one phenoplast resin, and
    iii) 0.5 to 30% by weight urea,

    based on the total weight of the dry solid content of the resin binder composition.

- A resin binder composition comprising

    i) 20 to 70% by weight of at least one resin P containing in the form of polymerized units at least one ethylenically unsaturated monomer M selected from the group consisting of acrylic acid, itaconic acid, methacrylic acid, and mixtures thereof,
    ii) 9 to 60% by weight of at least one aminoplast resin and/or at least one phenoplast resin, and
    iii) 1 to 21%, by weight of at least one urea derivative and/or urea,

    based on the total weight of the dry solid content of the resin binder composition.

Preferably, the inventive resin binder composition comprises at least one resin P containing in the form of polymerized units at least one ethylenically unsaturated monomer M that is acrylic acid.

More preferably, the resin binder composition according to the invention comprises:

    i) 20 to 70%, by weight of at least one resin P containing in the form of polymerized units at least one ethylenically unsaturated monomer M that is acrylic acid,
    ii) 10 to 60% by weight of at least one aminoplast resin and/or at least one phenoplast resin, and
    iii) 10 to 20% by weight of urea,

based on the total weight of the dry solid content of the resin binder composition.

More preferably, the resin binder composition according to the invention comprises:

    i) 8 to 60%, by weight of at least one resin P containing in the form of polymerized units of at least one ethylenically unsaturated monomer M that is acrylic acid,
    ii) 4 to 55% by weight of at least one aminoplast resin and/or at least one phenoplast resin, and
    iii) 1 to 15 % by weight of urea and/or at least one urea derivative, and
    iv) 10 to 40% by weight of at least one additive,

based on the total weight of the dry solid content of the resin binder composition.

More preferably, the resin binder composition according to the invention comprises:

    i) 8 to 60%, by weight of at least one resin P containing in the form of polymerized units of at least one ethylenically unsaturated monomer M that is acrylic acid,
    ii) 4 to 55% by weight of at least one aminoplast resin and/or at least one phenoplast resin, and
    iii) 1 to 15 % by weight of urea and/or at least one urea derivative, and
iv) 10 to 40% by weight of at least one additive, wherein the additive is a flame retardant,

based on the weight of the total dry solid content of the resin binder composition.

The resin binder composition can be prepared by commonly known methods. After the preparation of the inventive resin binder composition, the inventive composition can be used for the preparation of a filter medium.

Therefore, a further embodiment of the invention relates to a method for producing the inventive filter medium comprising the following steps:

- providing at least one layer L.
- applying a resin binder composition according to the invention to the at least one layer L.

By applying the inventive resin binder composition to the at least one layer L, the layer L is impregnated with the resin binder composition, preferably in such a way that the composition penetrates 10% to 95%, preferably 50 to 80 % of the thickness of the layer L and the opposite side remains free of resin binder composition. More preferably, the at least one layer L is completely penetrated by the inventive resin binder composition.

The inventive resin binder composition may be applied using known techniques, such as spraying, dipping, roller application, foam application, or dusting. A saturating size press or other conventional means may be used to apply the inventive resin binder composition, such as curtain coaters, metered press coaters, foam bonders, graver rolls, dip and nip, doctorate transfer rolls, rod coaters, and spray coaters to the at least one layer L. When the resin binder composition is applied in liquid form (as it is the case for example by dipping) the components i) to iv) above are mixed together in a solvent. Preferred solvents are water, organic solvents or mixture thereof. Among the organic solvents, alcohols can be mentioned such as methanol or ethanol.

Preferably, the filter medium of the present invention comprises:

a) at least one layer L, and
b) the resin binder composition of the present invention.

More preferably, the filter medium of the present invention comprises:

a) at least one layer L, and
b) the resin binder composition according to the present invention, wherein the resin binder composition is applied to at least one surface of the layer L, preferably, to the two largest surfaces, more preferably to all surfaces.

Preferably, the filter medium comprises:

a) at least one layer L comprising:

a1) 10 to 100% by weight of natural fibers,
a2) 0 to 90% by weight of synthetic and/or inorganic fibers, based on the total weight of the fibers in the layer L,

and
b) 5 to 40% by weight of the resin binder composition according to the present invention, based on the total weight of the at least one layer L.

Preferably, natural fibers are cellulose fibers, regenerated celluloses and fibrillated celluloses, more preferable cellulose fibers.

Preferably, the inventive filter medium comprises a2) 0 to 90% by weight of synthetic fibers. Preferably, the synthetic fibers are polyester fibers.

Preferably, the at least one layer L comprises 60 to 90% by weight of natural fibers (a1) and 10 to 40% by weight of synthetic and/or inorganic fibers (a2). Preferably, the at least one layer comprises 70 to 90% by weight of natural fibers (a1) and 10 to 30% by weight of synthetic and/or inorganic fibers (a2). Preferably, the at least one layer comprises 60 to 90% by weight of natural fibers (a1) and 10 to 40% by weight of synthetic fibers (a2). Preferably, the at least one layer comprises 70 to 90% by weight of natural fibers (a1) and 10 to 30% by weight of synthetic fibers (a2), wherein in each case the % by weight is based on the total weight of the fibers in the layer L.

Preferably, the filter medium comprises:

a) at least one layer L comprising:

a1) 10 to 100% by weight of natural fibers,
a2) 0 to 90% by weight of synthetic fibers, based on the total weight of the fibers in the layer L,

and
b) 5 to 40% by weight of the resin binder composition according to the present invention, based on the total weight of the at least one layer L,
wherein the resin binder composition comprises

i) 8 to 98.5%, preferably 22 to 80%, by weight of at least one resin P containing in the form of polymerized units at least one ethylenically unsaturated monomer M that is acrylic acid,
ii) 1 to 62%, preferably 2 to 58%, by weight of at least one aminoplast resin, and
iii) 0.5 to 30%, preferably 2 to 20%, by weight of at least one urea derivative and/or urea,

based on the total weight of the dry solid content of the resin binder composition.

Preferably, the filter medium comprises:

a) at least one layer L comprising:

a1) 10 to 100% by weight of natural fibers,
a2) 0 to 90% by weight of synthetic fibers, based on the total weight of the fibers in the layer L,

and

b) 5 to 40% by weight of the resin binder composition according to the present invention, based on the total weight of the at least one layer L, wherein the resin binder composition comprises

i) 8 to 60% by weight of at least one resin P containing in the form of polymerized units of at least one ethylenically unsaturated monomer M that is acrylic acid,
ii) 4 to 55% by weight of at least one aminoplast resin and/or at least one phenoplast resin, and
iii) 1 to 15% by weight of urea and/or at least one urea derivative, and
iv) 10 to 40% by weight of at least one additive,

based on the total weight of the dry solid content of the resin binder composition.

Preferably, in the present invention the urea or urea derivative react with the formaldehyde on the filter medium and not in the resin binder composition before application of this composition on the filter medium. In other words, in the present invention the urea and/or urea derivatives preferably do not act as scavengers for the free formaldehyde, which might be present in a resin binder composition. The urea and/or urea derivatives act as scavengers for the formaldehyde, originally bound in the backbone of the binders and/or cross-linkers present in the resin system, and emitted (or released) in free form over time and after application of the resin binder composition on the filter medium.

Preferably, the filter medium comprises at least one layer L, wherein the thickness of the at least one layer is 0.10-2.00 mm, preferably 0.10-1.00 mm and more preferably 0.17-0.50, as measured according to DIN EN ISO 534 2012-02.

Preferably, the filter medium comprises at least one layer L, wherein the air permeability of the at least one layer L is 40-2000 L/m$^2$s, preferably 80-1000 L/m$^2$s, and more preferably 90-300 L/m$^2$s, as measured according to DIN EN ISO 9237 at a pressure difference of 200 Pa and a sample size of 20 cm$^2$ using a Textest FX3300 instrument with a 20 cm$^2$ testing head.

Preferably, in the filter medium according to the present invention, the amount of formaldehyde released is less than 5 g/kg, more preferably less than 4 g/kg, more preferably less than 2 g/kg, more preferably less than 1 g/kg, more preferably less than 0.9 g/kg, and most preferably less than 0.8 g/kg, as measured according to AATCC test method 112-2014.

Preferably, in the filter medium according to the present invention the basis weight of the at least one layer L is from 50-400 g/m$^2$, preferably 60-300 g/m$^2$ and more preferably 80-150 g/m$^2$.

The filter medium according to the present invention can be used in many applications such as liquid and gas filtration.

Preferably, the filter medium according to the present invention is used for air filtration. More preferably, the filter medium according to the present invention is used for automotive industry and specifically as engine air filter medium and any air filter that may be used in electric vehicles. Further, the filter medium according to the present invention, can be used in industrial filtration, i.e. pulse jet filter etc.

Preferably, the filter medium comprising

a) at least one layer L comprising:

a1) 10 to 100%, preferably 60 to 90%, by weight of natural fibers,
a2) 0 to 90%, preferably 10 to 40%, by weight of synthetic and/or inorganic fibers, based on the total weight of the fibers in the layer L,

and

b) 5 to 40% by weight of the resin binder composition, based on the total weight of the at least one layer L, comprising:

i) 8 to 98.5%, preferably 22 to 80%, by weight of at least one resin P containing in the form of polymerized units at least one ethylenically unsaturated monomer M, wherein the monomer M optionally comprises further functional groups,
ii) 1 to 62%, preferably 2 to 58%, by weight of at least one aminoplast resin and/or at least one phenoplast resin, and
iii) 0.5 to 30%, preferably 2 to 20%, by weight of at least one urea derivative and/or urea,

based on the total weight of the dry solid content of the resin binder composition,
is used for air filtration.

Preferably, the filter medium comprising

a) at least one layer L comprising:

a1) 10 to 100%, preferably 60 to 90%, by weight of cellulose fibers,
a2) 0 to 90%, preferably 10 to 40%, by weight of synthetic fibers, based on the total weight of the fibers in the layer L,

and

b) 5 to 40% by weight of the resin binder composition, based on the total weight of the at least one layer L, comprising:

i) 8 to 98.5%, preferably 22 to 80%, by weight of at least one resin P containing in the form of polymerized units at least one ethylenically unsaturated monomer M, wherein the monomer M optionally comprises further functional groups,
ii) 1 to 62%, preferably 2 to 58%, by weight of at least one aminoplast resin and/or at least one phenoplast resin, and
iii) 0.5 to 30%, preferably 2 to 20%, by weight of at least one urea derivative and/or urea,

based on the total weight of the dry solid content of the resin binder composition,
is used for air filtration.

Preferably, the filter medium comprising

a) at least one layer L comprising:

a1) 10 to 100%, preferably 60 to 90%, by weight of cellulose fibers,
a2) 0 to 90%, preferably 10 to 40%, by weight of synthetic fibers, wherein the synthetic fibers are polyester fibers, based on the total weight of the fibers in the layer L,

and
b) 5 to 40% by weight of the resin binder composition, based on the total weight of the at least one layer L, comprising:

i) 8 to 98.5%, preferably 22 to 80%, by weight of at least one resin P containing in the form of polymerized units at least one ethylenically unsaturated monomer M, wherein the monomer M optionally comprises further functional groups,
ii) 1 to 62%, preferably 2 to 58%, by weight of at least one aminoplast resin and/or at least one phenoplast resin, and
iii) 0.5 to 30%, preferably 2 to 20%, by weight of at least one urea derivative and/or urea,

based on the total weight of the dry solid content of the resin binder composition,
is used for air filtration.

Preferably, the filter medium comprising

a) at least one layer L comprising:

a1) 10 to 100%, preferably 70 to 90%, by weight of cellulose fibers,
a2) 0 to 90%, preferably 10 to 30%, by weight of synthetic fibers, wherein the synthetic fibers are polyester fibers, based on the total weight of the fibers in the layer L,

and
b) 5 to 40% by weight of the resin binder composition, based on the total weight of the at least one layer L, comprising:

i) 8 to 98.5%, preferably 22 to 80%, by weight of at least one resin P containing in the form of polymerized units at least one ethylenically unsaturated monomer M, wherein the monomer M is acrylic acid,
ii) 1 to 62%, preferably 2 to 58%, by weight of at least one aminoplast resin and/or at least one phenoplast resin, and
iii) 0.5 to 30%, preferably 2 to 20%, by weight of at least one urea derivative and/or urea,

based on the total weight of the dry solid content of the resin binder composition,
is used for air filtration.

Preferably, the filter medium comprising

a) at least one layer L comprising:

a1) 10 to 100%, preferably 70 to 90%, by weight of cellulose fibers,
a2) 0 to 90%, preferably 10 to 30%, by weight of synthetic fibers, wherein the synthetic fibers are polyester fibers, based on the total weight of the fibers in the layer L,

and
b) 5 to 40% by weight of the resin binder composition, based on the total weight of the at least one layer L, comprising:

i) 8 to 98.5%, preferably 22 to 80%, by weight of at least one resin P containing in the form of polymerized units at least one ethylenically unsaturated monomer M, wherein the monomer M is acrylic acid,
ii) 1 to 62%, preferably 2 to 58%, by weight of at least one aminoplast resin, and
iii) 0.5 to 30%, preferably 2 to 20%, by weight of at least one urea derivative and/or urea,

based on the total weight of the dry solid content of the resin binder composition,
is used for air filtration.

Preferably, the filter medium comprising

a) at least one layer L comprising:

a1) 10 to 100%, preferably 60 to 90%, by weight of cellulose fibers,
a2) 0 to 90%, preferably 10 to 40%, by weight of synthetic fibers,
based on the total weight of the fibers in the layer L,

and
b) 5 to 30% by weight of the resin binder composition, based on the total weight of the at least one layer L, comprising:

i) 8 to 60%, by weight of at least one resin P containing in the form of polymerized units of at least on ethylenically unsaturated monomer M that is acrylic acid,

ii) 4 to 55% by weight of at least one aminoplast resin and/or at least on phenoplast resin, and

iii) 1 to 15% by weight of urea and/or urea derivative, and

iv) 0 to 55%, preferably 0.1 to 55%, by weight of at least one additive,

based on the total weight of the dry solid content of the resin binder composition, is used for air filtration.

The filter medium of the present invention comprises at least one layer L. Preferably, the filter medium of the present invention comprises from one to five layers in addition to the at least one layer L, more preferably from one to four layers in addition to the at least one layer L, even more preferably from one to three layers in addition to the at least one layer L, even more preferably from one to two layers in addition to the at least one layer L.

Preferably, the filter medium of the present invention consists of at least one layer L. More preferably, the filter medium of the present invention consists of one to five layers in addition to the at least one layer L, more preferably from one to four layers in addition to the at least one layer L. Most preferably, the filter medium of the present invention consists of one layer L.

The at least one layer L can be any layer selected from the group of wet-laid nonwovens, dry-laid nonwovens and foam layers. Preferably, the at least one layer L is a wet-laid nonwoven.

The additional layer that can be combined with the layer L, can be any layer selected from the group of wet-laid nonwovens, dry-laid nonwovens and foam layers.

Within the meaning of this invention, wet-laid nonwovens are all nonwovens that can be produced using wet-laying processes known to the skilled person for manufacturing filter media.

Within the meaning of this invention, dry-laid nonwovens include, for example, meltblown nonwovens and spunlaid nonwovens, which can be produced according to known manufacturing methods.

The wet-laid nonwoven or dry-laid nonwoven for the filter layer material according to the invention comprises natural, synthetic, inorganic fibers or mixture thereof.

Examples of natural fibers are cellulose, cotton, wool, hemp, regenerated celluloses and fibrillated celluloses.

Inorganic fibers are, for example, glass fibers, basalt fibers and quartz fibers. Preferably, the inorganic fibers are glass fibers. The average fiber diameter of the inorganic fibers is 0.1 to 15 $\mu$m, preferably 0.6 to 10 $\mu$m.

Polyester fibers, polypropylene fibers, multicomponent fibers of which the individual components have different melting points, polyamide fibers and acrylic fibers for example are suitable as synthetic fibers.

Examples of polyester fibers are polybutylentherephthalate (PBT) fibers, polyethylentherephthalate (PET) fibers and polylactic acid (PLA) fibers.

Examples of preferred multicomponent fibers are PET/CoPET bicomponent fibers having core-sheath configuration.

The average fiber diameter of the synthetic fibers is typically from 3 to 30 $\mu$m, preferably 5 to 15 $\mu$m, and the cutting length is typically from 3-20 mm, preferably 4-12 mm.

Suitable polymers to be used for the meltblown nonwovens and spunlaid nonwovens are, for example, polyethylene terephthalate, polybutylene terephthalate, polyamide, polyphenylene sulfide, polyolefin, and polyurethane or mixture thereof.

In many applications a spunlaid nonwoven comprising bicomponent fibers is particularly advantageous. Example of preferred multicomponent fibers are PET/CoPET bicomponent fibers having core-sheath configuration. The typical average fiber diameter for spunlaid nonwoven is 5-30 $\mu$m, preferably 10-20 $\mu$m and even more preferably 12-17 $\mu$m.

The average fiber diameters for meltblown fibers are 0.5-10 $\mu$m, preferably 0.5-5 $\mu$m. Preferably the at least one layer L is combined with at least one meltblown layer. Preferably, the meltblown layer comprises polypropylene or polyester fibers.

When the filter medium comprises a further layer, in addition to the layer L, this is preferably a meltblow layer.

Preferably, the diameter (size) of "many pores" according to the pore size measurement described below is between 10 and 100 $\mu$m of the at least one layer L. More preferably, the diameter (size) of "many pores" according to the pore size measurement described below is in between 20 and 50 $\mu$m.

Preferably, the maximum pore size (diameter) is 20 to 120 $\mu$m. The pore size is measured with reference to DIN ISO 4003. The sample is placed between an airtight clamp over an orifice equipped with air supply and a connection to a pressure guage (U-tube with mm indicator). Each sample is tested with the upper side facing upwards. Denatured ethanol (ethanol 100% with 1% MEK (Methyl-Ethyl-Ketone) as denaturant) is poured over the edge of the upper specimen holder (do not spray directly onto the sample / aprox. 4mm depth) to achieve a slight excess of air pressure on the liquid. The air pressure is slowly increased (aprox. 5mm Water Guage/sec) until the first air bubble is visible. The necessary air pressure level is to be read from the pressure guage (in mm Water Guage) and, with the help of the surface tension of the ethanol (23°C), the diameter of the largest pore ("Maximum Pore", "maximum pore size", "maximum pore diameter") can be calculated.

The air pressure is then increased further until air is passing through the sample over the entire surface (10cm$^2$) with an even distribution of bubbles but without foaming to determine the value for "many pores". The air pressure is read off again at this point and the relative pore diameter, i.e. the diameter of "many pores" is calculated.

The "maximum pore size" and "many pores" can be calculated as described above by using the following formula:

$$d = \frac{4 \sigma \cdot cos\ \alpha}{p} \cdot 1.000000$$

d = Pore diameter [$\mu$m]
p = Air pressure [mN/m$^2$]
$\sigma$ = Surface tension of the test liquid (e. g. ethanol) [Ethanol at 23°C $\sigma$ = 21.330225 mN/m]
$\sigma$ = Contact angle at the area where the liquid and the sample meet

(Conversion: 1mm Water Guage = 98.07 mN/m$^2$)

Preferably, the burst strength according to Mullen under dry conditions (with reference to DIN EN ISO 2758) of the at least one layer L is 200-500 kPa and preferably 250-500 kPa. Testing conditions: The layer L was kept for 24 h at 25 °C and 50% relative humidity before measurement.

The burst strength according to Mullen under wet conditions of the at least one layer L is 90-500 kPa and preferably 100-500. Testing conditions: the layer L is soaked for 10 minutes in distilled water (at 23°C) and then blotted between two pieces of blotting paper before measurement.

Preferably, the width related bending stiffness of the at least one layer L is in the range of 200-600 cNmm. Testing conditions (with reference to DIN 53 121:2014-08: The layer L is conditioned for 24H at 25°C and 50% relative humidity prior to the measurement. 10 samples are taken from the machine direction and cut to a size of 15mm width and 60mm length. From each of these, half of the samples (i.e. 5 sample) are tested with the upper side towards the top and the other half with the bottom side towards the bending knife. Average of all 10 values determines the bending stiffness. Testing equipment is a Frank PTI Bending Resistance Tester type S58566. Testing speed 3°/s, angle 15°, hold time 0.5 s, preforce 0.005 N, band width 15 mm, test distance 10 mm. Average of all 10 values determines the bending stiffness.

Preferably, the dust holding capacity of the at least one layer L is equal to or higher than 70 g/m$^2$, preferably equal to or higher than 80 g/m$^2$, even more preferably equal to or higher than 90 g/m$^2$, most preferably equal to or higher than 95 g/m$^2$. The dust holding capacity is determined according to ISO 5011 using Palas MFP30005. Test conditions: face velocity 11.1 cm/s, final pressure drop 2000 pa, test dust ISO 12103-1, A2 fine.

Preferably, the full-life efficiency calculated by weight of the at least one layer L is equal to or higher than 90.00%, preferably equal to or higher than 95.00% even more preferably equal to or higher than 99.00%. The full-life efficiency calculated by weight has been determined by flat sheet testing according ISO 5011 using Palas MFP30005. Test conditions: face velocity 11.1 cm/s, final pressure drop 2000 pa, test dust iso 12103-1, A2 fine.

The filter medium of the present invention shows a very good redrying behavior. In order to measure the redrying behavior of the at least one layer L, the at least one layer L was soaked for 10 minutes in distilled water (at 23°C) and then blotted between two pieces of blotting paper. The air permeability of the so treated filter medium was then measured using a Textest FX3300 instrument with a 20 cm$^2$ testing head and a pressure difference of 200 Pa (with reference to DIN EN ISO 9237). The redrying behavior is the time necessary to achieve the air permeability value of the untreated sample in the soaked sample. In other words, the following steps are necessary:

1) measurement of air permeability of the sample;
2) soaking the sample in distilled water and blotting as indicated above;
3) measurement of air permeability and determination of the time necessary to achieve the air permeability value of 1) above in the soaked sample.

It has been found that complete redrying was achieved after less than 15 min, preferably less than 10 min and even more preferably less than 8 min. For step 3) above, the sample was kept under the air flow of the instrument and the air permeability was measured over the time (i.e. 15 minutes, 10 minutes and 8 minutes).

The at least one layer L can be classified as S1 according to Smolder Test which is a testing prodecure according to Ford Laboratory Test Method BS 152-01. A vertically positioned sample is pierced with an IR wire (800 °C (4,5 Volt/8 Watt) or 900 °C (5 Volt/9 Watt). To be determined is the point at which the flame extinguishes itself or burns through the sample. The sample is conditioned for 24 h at 25 °C and 50% relative humidity. The sample is marked with circles of diameter 1,2/ 3,5/ 5,0/ 7,0 cm. The test is to be conducted with the flue switched on. The IR-Wire is to be heated up for at least 2 minutes to ensure the correct temperature is reached. The hot IR-Wire is carefully pierced through the paper and then slowly withdrawn. In so doing the edges are to come into full contact with the IR-Wire.

Depending on the result, samples are to be classed in the following categories:

S1 Self-extinguishing within Circle 1 (Ø 1,2 cm)
S2 Self-extinguishing within Circle 2. (Ø 3,5 cm)

S3 Self-extinguishing within Circle 3. (Ø 5,0 cm)
S4 Did not self-extinguish within 3 minutes or self-extinguished beyond Circle

As shown in the examples, in the filter medium according to the present invention the formaldehyde emission is lowered without impairing the mechanical properties or the filtration performances.

Example 1

A nonwoven layer was produced using a wet laid process. The layer comprises 80% by weight of cellulose fibers and 20% by weight of PBT fibers, based on the total weight of the fibers in the layer. This layer was then impregnated with a resin binder composition comprising 47% by weight of acrylic resin, 12% by weight of an aminoplast, 5% by weight of urea and 36% by weight of at least one additive (wt% is based on the total weight of the dry solid content of the resin binder composition.

- Thickness: 0.35 mm
- Air permeability: 282 L/m$^2$s
- Basis weight: 123 g/m$^2$
- Many pores: ~53 $\mu$m
- Max. pore: 73
- Full-life efficiency: 99.8%
- Dust holding capacity: 103 g/m$^2$
- Bursting strength (dry): 306 kPa
- Bursting strength (wet) (10 min/dest. water): 271 kPa
- Width related bending stiffness (15 °MD): 320 cNmm (band size: 15 mm)
- Amount of formaldehyde released: 4,5 g/kg
- Redrying: 5 minutes
- Smolder Test: S1

Comparative Example 1

Same process as above and same fiber composition. Saturation: 47% by weight acrylic resin, 12% by weight of an aminoplast and 41% by weight of at least one additive (wt% is based on the total weight of the dry solid content of the resin binder composition).

- Thickness: 0.33 mm
- Air permeability: 295 L/m$^2$s
- Basis weight: 125 g/m$^2$
- Many pores: ~55 $\mu$m
- Max. pore: 71
- Full-life efficiency: 99.8%
- Dust holding capacity: 104 g/m$^2$
- Bursting strength (dry): 305 kPa
- Bursting strength (wet) (10 min/dest. water): 290 kPa
- Width related bending stiffness (15 °MD): 326 cNmm (band size: 15 mm)
- Amount of formaldehyde released: 10.0 g/kg
- Redrying: 7 minutes

Example 2

A nonwoven layer was produced using a wet laid process. The layer comprises 100% by weight of cellulose fibers, based on the total weight of the fibers in the layer. This layer was then impregnated with a resin binder composition comprising 67% by weight of acrylic resin, 4% by weight of aminoplast, 10% by weight of urea and 19% by weight of at least one additive (wt% is based on the total weight of the dry solid content of the resin binder composition).

- Thickness: 0.32 mm
- Air permeability: 119 L/m$^2$s
- Basis weight: 118 g/m$^2$
- Many pores: ~30 $\mu$m
- Max. pore: ~42 $\mu$m
- Full-life efficiency: 99.9%
- Dust holding capacity: 97 g/m$^2$
- Bursting strength (dry): 390 kPa
- Bursting strength (wet): 103 kPa
- Smolder Test: S1
- Amount of formaldehyde released: 0.7 g/kg
- Redrying after 7 minutes
- Width related bending stiffness (15 °MD): 244 cNmm (band size: 15 mm)

**Claims**

1. A resin binder composition comprising:

    i) at least one resin P containing in the form of polymerized units at least one ethylenically unsaturated monomer M, wherein the monomer M optionally comprises further functional groups,
    ii) at least one aminoplast resin and/or at least one phenoplast resin,
    iii) at least one urea derivate and/or urea, and
    iv) optionally at least one additive.

2. The resin binder composition according to claim 1, wherein the ethylenically unsaturated monomer M is selected from the group consisting of acrylic acid, methacrylic acid or the salts thereof, acrylamide or mixtures thereof.

3. The resin binder composition according to claim 1 or 2, comprising:

    i) 8 to 98.5% by weight of at least one resin P,
    ii) 1 to 62% by weight of at least one aminoplast resin and/or at least one phenoplast resin, and
    iii) 0.5 to 30% by weight of at least one urea derivative and/or urea,

based on the total weight of the dry solid content of the resin binder composition.

**4.** The resin binder composition according to any of the claims 1 to 3, wherein the at least one aminoplast resin is selected from the group consisting of urea formaldehyde resins, melamine formaldehyde resins, melamine polyesters and melamine phenol formaldehyde resins.

**5.** The resin binder composition according to any of the claims 1 to 4, wherein the at least one phenoplast resin is selected from the group consisting of resole resins and novolac resins.

**6.** The resin binder composition according to any of the claims 1 to 5, wherein the at least one ethylenically unsaturated monomer M is acrylic acid.

**7.** The resin binder composition according to any one of claims 1 to 6, wherein the at least one additive comprises a flame retardant.

**8.** A filter medium comprising:

a) at least one layer L, and
b) the resin binder composition according to any one of the claims 1 to 7.

**9.** The filter medium according to claim 8 comprising:

a) at least one layer L comprising:

a1) 10 to 100% by weight of natural fibers,
a2) 0 to 90% by weight of synthetic and/or inorganic fibers, based on the total weight of the fibers in the layer L, and

b) 5 to 40% by weight of the resin binder composition, based on the total weight of the at least one layer L.

**10.** The filter medium according to any of the claims 7 to 9, wherein the amount of formaldehyde released is less than 5 g/kg as measured according to AATCC test method 112-2014.

**11.** The filter medium according to any of the claims 7 to 10, wherein the synthetic fibers are polyester fibers.

**12.** The filter medium according to any of the claims 7 to 11, wherein the at least one layer L is a wet-laid layer.

**13.** The filter medium according to any one of claims 7 to 12, wherein the at least one layer L has an full-life efficiency equal to or higher than 90,00%.

**14.** A filter element comprising the filter medium according to any of the claims 7 to 13.

**15.** Use of the filter medium according to any one of the claims 7 to 13 for air filtration.

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 670 585 A (TAYLOR THOMAS J [US] ET AL) 23 September 1997 (1997-09-23) | 1-3,5,6, 8,10,13, 14 | INV. C08L61/24 D21H17/37 |
| Y | * claims 1-2, 10, 18; examples 1, 2 * | 4,7,9, 11,12,15 | D21H17/51 B01D39/16 |
| | ----- | | B01D39/18 |
| Y | US 8 057 583 B2 (GROVE III DALE ADDISON [US]; JAFFEE ALAN MICHAEL [US] ET AL.) 15 November 2011 (2011-11-15) * column 1, lines 29-30, 38 * * column 2, lines 13-19 * * column 3, lines 16-17 * * column 5, lines 16-38 * ----- | 4,7,9, 11,12,15 | B01D39/20 D04H1/64 C03C25/34 |

TECHNICAL FIELDS
SEARCHED (IPC)

B01D

The present search report has been drawn up for all claims

| Place of search | Date of completion of the search | Examiner |
|---|---|---|
| The Hague | 5 February 2020 | Artos Fernández, V |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 19 5888

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2020

| Patent document cited in search report | | Publication date | Patent family member(s) | | Publication date |
|---|---|---|---|---|---|
| US 5670585 | A | 23-09-1997 | AT | 182862 T | 15-08-1999 |
| | | | CA | 2179104 A1 | 14-12-1996 |
| | | | DE | 69603548 D1 | 09-09-1999 |
| | | | DE | 69603548 T2 | 23-12-1999 |
| | | | DK | 0748777 T3 | 06-12-1999 |
| | | | EP | 0748777 A1 | 18-12-1996 |
| | | | ES | 2137587 T3 | 16-12-1999 |
| | | | US | 5670585 A | 23-09-1997 |
| US 8057583 | B2 | 15-11-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140263037 A
- DE 102016125431
- US 20070191574 A1